# EUROPÄISCHE PATENTSCHRIFT

(11) **EP 2 883 733 B1**
(45) Veröffentlichungstag und Bekanntmachung des Hinweises auf die Patenterteilung: **24.02.2016**
(21) Anmeldenummer: 14002669.1
(22) Anmeldetag: 31.07.2014
(51) Int. Cl.: B60K 15/03

(54) **Tankanlage für ein Fahrzeug**
Tank system for a vehicle
Installation de réservoir pour un véhicule

(30) Priorität: 13.12.2013 DE 102013021007
(43) Veröffentlichungstag der Anmeldung: 17.06.2015
(73) Patentinhaber: MAN Truck & Bus AG, 80995 München (DE)
(72) Erfinder: Hofstetter, Thomas, 84048 Mainburg (DE)

(56) Entgegenhaltungen:
- WO-A1-96/26388
- WO-A1-2009/080173
- GB-A- 1 459 203
- JP-A- 2001 012 326
- US-A1- 2012 180 778
- US-B1- 6 789 568

## Beschreibung

Die Erfindung betrifft eine Tankanlage, insbesondere für ein Fahrzeug, wie beispielsweise ein Kraftfahrzeug (z.B. Lastkraftwagen oder Omnibus).

Aus dem Stand der Technik sind Tankanlagen für Lastkraftwagen bekannt, die einen Haupttank und einen Nebentank zur Aufnahme des Kraftstoffs (z.B. Dieselkraftstoff) aufweisen, wobei der Haupttank und der Nebentank beispielsweise auf gegenüberliegenden Seiten des Fahrzeugrahmens nebeneinander angeordnet sein können. Hierbei ist es bekannt, den Haupttank über eine unten liegende Ausgleichsleitung mit dem Nebentank zu verbinden, um einen Füllstandsausgleich zwischen dem Haupttank und dem Nebentank zu ermöglichen.

Ein Nachteil dieser bekannten Tankanlage besteht darin, dass eine Undichtigkeit der Ausgleichsleitung zwischen dem Haupttank und dem Nebentank zu einem Austritt des Kraftstoffs aus der Tankanlage führt.

Ein weiterer Nachteil dieser bekannten Tankanlage besteht darin, dass keine separate Befüllung des Haupttanks ohne eine gleichzeitige Befüllung des Nebentanks möglich ist, da der Füllstand in dem Haupttank und in dem Nebentank immer ausgeglichen wird.

Aus US 2012/0180778 A1 ist eine Tankanlage gemäß dem Oberbegriff des Anspruchs 1 bekannt. Hierbei ist zwar in der Ausgleichsleitung zwischen zwei Tanks ein steuerbares Ventil angeordnet, das den Flüssigkeitsstrom durch die Ausgleichsleitung steuert. Allerdings bestehtt hierbei die Gefahr, dass Flüssigkeit austritt, wenn in der Ausgleichsleitung eine Undichtigkeit auftritt.

Ferner ist zum Stand der Technik hinzuweisen auf WO 2009/080173 A1, JP 2001 012326 A, WO 96/26388 A1, GB 1 459 203 A und US 6 789 568 B1.

Der Erfindung liegt deshalb die Aufgabe zugrunde, eine entsprechend verbesserte Tankanlage zu schaffen.

Diese Aufgabe wird durch eine erfindungsgemäße Tankanlage gemäß dem Hauptanspruch gelöst.

Die erfindungsgemäße Tankanlage weist in Übereinstimmung mit dem Stand der Technik sowohl einen Haupttank als auch einen Nebentank auf, wobei die Tankanlage zusätzlich zu dem Haupttank und dem Nebentank auch weitere Tanks aufweisen kann.

Der Haupttank und der Nebentank dienen bei der erfindungsgemäßen Tankanlage zur Aufnahme einer Betriebsflüssigkeit des Fahrzeugs, wobei es sich vorzugsweise um Kraftstoff (z.B. Dieselkraftstoff) handelt. Die Erfindung ist jedoch hinsichtlich der Betriebsflüssigkeit nicht auf Kraftstoff beschränkt, sondern auch für andere Betriebsflüssigkeiten des Fahrzeugs geeignet.

Ferner ist die Erfindung nicht beschränkt auf Tankanlagen von Fahrzeugen, sondern auch bei stationären Tankanlagen oder sonstigen Behältern realisierbar.

Darüber hinaus umfasst die erfindungsgemäße Tankanlage in Übereinstimmung mit dem Stand der Technik eine Ausgleichsleitung zwischen dem Haupttank und dem Nebentank, wobei die Ausgleichsleitung einen Füllstandsausgleich zwischen dem Haupttank und dem Nebentank ermöglicht, indem die Betriebsflüssigkeit von dem Haupttank in den Nebentank oder in umgekehrter Richtung durch die Ausgleichsleitung fließt.

Die erfindungsgemäße Tankanlage zeichnet sich durch eine Ventilanordnung aus, die den Ausfluss aus dem Haupttank und/oder aus dem Nebentank in die Ausgleichsleitung steuert.

In einem bevorzugten Ausführungsbeispiel der Erfindung schließt die Ventilanordnung den Ausfluss aus dem Haupttank und aus dem Nebentank bei einer Undichtigkeit der Ausgleichsleitung und verhindert dadurch ein Austreten der Betriebsflüssigkeit aus der undichten Ausgleichsleitung, wodurch eine Leckage verhindert wird.

Darüber hinaus schließt die Ventilanordnung bei dem bevorzugten Ausführungsbeispiel der Erfindung auch bei einer Erstbefüllung des Haupttanks bei leerem Nebentank, wodurch eine separate Befüllung des Haupttanks ohne einen Füllstandsausgleich mit dem leeren Nebentank ermöglicht wird.

Erfindungsgemäß umfasst die Ventilanordnung an dem Haupttank und an dem Nebentank jeweils ein Auslassventil, das den Ausfluss aus dem Haupttank bzw. aus dem Nebentank in die Ausgleichsleitung steuert.

Das Auslassventil des Haupttanks schließt vorzugsweise nur dann, wenn der Haupttank zumindest teilweise gefüllt ist und wenn gleichzeitig der Nebentank leer ist oder die Ausgleichsleitung undicht ist. Ansonsten öffnet das Auslassventil des Haupttanks dagegen.

Darüber hinaus schließt das Auslassventil des Nebentanks vorzugsweise nur dann, wenn der Nebentank zumindest teilweise gefüllt ist und wenn gleichzeitig der Haupttank leer ist oder die Ausgleichsleitung undicht ist. Ansonsten öffnet das Auslassventil des Nebentanks dagegen.

In dem bevorzugten Ausführungsbeispiel der Erfindung weisen die Auslassventile des Haupttanks und des Nebentanks eine besondere Bauweise auf, die sich als vorteilhaft erwiesen hat. So weisen die Auslassventile vorzugsweise einen Ventilsitz auf, der in die Ausgleichsleitung mündet, sowie einen Ventilkäfig, der an dem Ventilsitz angeordnet ist und in den Tankinnenraum hinein ragt. In dem Ventilkäfig ist ein Ventilelement (z.B. Ventilkugel) frei beweglich gefangen, wobei das Ventilelement den Ventilsitz bei einer Anlage an dem Ventilsitz abdichtet, so dass das Auslassventil schließt.

Zum einen wirkt auf das Ventilelement eine Auftriebskraft, da das Ventilelement in der Betriebsflüssigkeit (z.B. Dieselkraftstoff) in dem Tankinnenraum aufschwimmt.

Zum anderen wirkt auf das Ventilelement aber auch eine Strömungskraft aufgrund des Ausflusses aus dem Haupt- bzw. Nebentank in die Ausgleichsleitung.

Die Abmessungen des Ventilelements und die Massendichte des Ventilelements sind relativ zu der Massendichte der Betriebsflüssigkeit vorzugsweise so abgestimmt, dass das Ventilelement nur bei einem starken Ausfluss (d.h. bei einem stärkeren Ausfluss als bei einem kontinuierlichen Füllstandsausgleich) durch die Ausgleichsleitung in den Ventilsitz gedrückt wird und den Ventilsitz ansonsten freigibt und zwar bei leerem Tank aufgrund der auf das Ventilelement wirkenden Schwerkraft und bei vollem Tank aufgrund der auf das Ventilelement wirkenden Auftriebskraft. Hierbei ist zu unterscheiden zwischen einem schwachen Ausfluss durch die Ausgleichsleitung, wie er bei einem kontinuierlichen Füllstandsausgleich auftritt, und einem starken Ausfluss aus der Ausgleichsleitung, wie er bei einer Undichtigkeit der Ausgleichsleitung oder bei der Erstbefüllung des Haupttanks bei leerem Nebentank auftritt. Das Auslassventil schließt also vorzugsweise nur bei einem starken Ausfluss, nicht dagegen bei einem schwachen Ausfluss im Rahmen eines kontinuierlichen Füllstandsausgleichs

Ferner ist zu erwähnen, dass die Ausgleichsleitung vorzugsweise unten in den Haupttank und in den Nebentank mündet, wie es an sich aus dem Stand der Technik bekannt ist. Beispielsweise kann die Ausgleichsleitung im unteren Viertel, Fünftel oder sogar im unteren Achtel des Haupttanks bzw. des Nebentanks in den Haupttank bzw. in den Nebentank münden, um auch bei einem niedrigen Füllstand einen Füllstandsausgleich über die Ausgleichsleitung zu ermöglichen.

Darüber hinaus ist zu erwähnen, dass die Ventilanordnung bzw. die Auslassventile vorzugsweise eigenmediumbetätigt sind. Dies bedeutet, dass die Ventilstellung durch die Betriebsflüssigkeit gesteuert wird und zwar konkret durch den Füllstand der Betriebsflüssigkeit und die Strömung der Betriebsflüssigkeit durch die Ausgleichsleitung. Davon zu unterscheiden ist eine externe Ansteuerung der Ventilanordnung bzw. des Auslassventils durch ein externes Steuersignal, wie es beispielsweise bei pneumatischen oder elektrischen Ventilen der Fall ist.

Schließlich umfasst die Erfindung auch ein komplettes Fahrzeug mit der vorstehend beschriebenen Tankanlage, wobei es sich vorzugsweise um ein Kraftfahrzeug (z.B. Lastkraftwagen oder Omnibus) handeln kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine schematische Darstellung einer erfindungsgemäßen Tankanlage bei leerem Haupttank und leerem Nebentank,
- Figur 2: die Tankanlage aus Figur 1 bei vollem Haupttank und leerem Haupttank,
- Figur 3: die Tankanlage aus den Figuren 1 und 2 bei vollem Haupttank und vollem Nebentank,
- Figur 4: die Tankanlage aus den Figuren 1 bis 3 bei einer Undichtigkeit der Ausgleichsleitung zwischen dem Haupttank und dem Nebentank,
- Figur 5: ein Zustandsdiagramm zur Verdeutlichung der Betriebsweise der Tankanlage aus den Figuren 1 bis 4, sowie
- Figur 6: eine Zustandstabelle der Tankanlage aus den Figuren 1 bis 4.

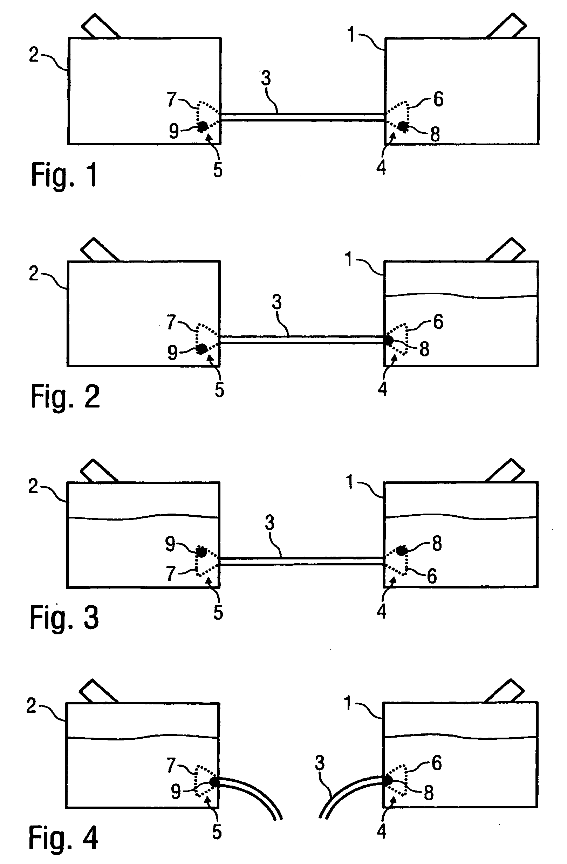

Figur 1 zeigt eine erfindungsgemäße Tankanlage mit einem Haupttank 1 und einem Nebentank 2, wobei der Haupttank 1 und der Nebentank 2 jeweils einen Einfüllstutzen aufweisen und unabhängig voneinander befüllt werden können. Der Haupttank 1 und der Nebentank 2 können beispielsweise in einem Lastkraftwagen auf gegenüberliegenden Seiten des Fahrzeugrahmens angeordnet sein.

Der Haupttank 1 ist über eine Ausgleichsleitung 3 mit dem Nebentank 2 verbunden, um einen Füllstandsausgleich zwischen dem Haupttank 1 und dem Nebentank 2 zu ermöglichen. Die Ausgleichsleitung 3 mündet hierbei jeweils unten in den Haupttank 1 bzw. in den Nebentank 2, um auch bei geringen Füllständen in dem Haupttank 1 und in dem Nebentank 2 einen Füllstandsausgleich durch die Ausgleichsleitung 3 zu ermöglichen.

Die dargestellte Tankanlage weist eine Ventilanordnung mit zwei Auslassventilen 4, 5 auf, wobei das Auslassventil 4 in dem Haupttank 1 den Ausfluss des Dieselkraftstoffs aus dem Haupttank 1 in die Ausgleichsleitung 3 steuert. Das Auslassventil 5 in dem Nebentank 2 steuert dagegen den Ausfluss des Dieselkraftstoffs aus dem Nebentank 2 in die Ausgleichsleitung.

Die beiden Auslassventile 4, 5 weisen jeweils einen Ventilsitz auf, der in die Ausgleichsleitung 3 mündet sowie einen trichterförmigen Ventilkäfig 6 bzw. 7, in dem eine Ventilkugel 8 bzw. 9 beweglich gefangen ist.

Die Ventilkugeln 8, 9 weisen eine geringere Massendichte auf als der Dieselkraftstoff, so dass die Ventilkugeln 8, 9 in dem Dieselkraftstoff aufschwimmen.

Weiterhin ist zu erwähnen, dass die Ventilkäfige 6, 7 für den Dieselkraftstoff durchlässig und für die Ventilkugeln 8, 9 undurchlässig sind.

In dem in Figur 1 dargestellten Zustand der Tankanlage bei leerem Haupttank 1 und leerem Nebentank 2 werden die Ventilkugeln 8, 9 in den Ventilkäfigen 6, 7 aufgrund der Schwerkraft nach unten gezogen und liegen somit nicht an dem jeweiligen Ventilsitz an, so dass die Auslassventile 4, 5 öffnen.

Figur 2 zeigt dagegen den Zustand der Tankanlage bei einer Erstbefüllung des Haupttanks 1 bei leerem Nebentank 2.

Zum einen wirkt dabei auf die Ventilkugel 8 des Auslassventils 4 des Haupttanks 1 eine Auftriebskraft aufgrund des Dieselkraftstoffs, wodurch die Ventilkugel 8 aufschwimmt.

Zum anderen entsteht bei steigendem Füllstand in dem Haupttank 1 ein Ausfluss aus dem Haupttank 1 durch die Ausgleichsleitung 3 in den Nebentank, wobei dieser Ausfluss die Ventilkugel 8 in den zugehörigen Ventilsitz drückt und dadurch das Auslassventil 4 des Haupttanks 1 schließt. Dadurch wird verhindert, dass bei einer Erstbefüllung des Haupttanks 1 bei leerem Nebentank 2 weiterer Kraftstoff über die Ausgleichsleitung 3 in den Nebentank 2 abfließt.

Figur 3 zeigt den Zustand der erfindungsgemäßen Tankanlage, wenn sowohl der Haupttank 1 als auch der Nebentank 2 gefüllt sind.

Hierbei wirkt auf die Ventilkugeln 8, 9 die Auftriebskraft aufgrund des Dieselkraftstoffs, so dass die Ventilkugeln 8, 9 in den zugehörigen Ventilkäfigen 6, 7 aufschwimmen. Dies hat zur Folge, dass die beiden Auslassventile 4, 5 öffnen, was einen Füllstandsausgleich zwischen dem Haupttank 1 einerseits und dem Nebentank 2 andererseits über die Ausgleichsleitung 3 ermöglicht. Bei diesem Füllstandsausgleich tritt zwar ebenfalls ein kleiner Flüssigkeitsstrom durch die Ausgleichsleitung 3 auf, jedoch ist dieser Flüssigkeitsstrom nicht stark genug, um die Ventilkugeln 8, 9 in den zugehörigen Ventilsitz zu drücken.

Figur 4 zeigt den Zustand der erfindungsgemäßen Tankanlage bei einer Undichtigkeit der Ausgleichsleitung 3, was durch ein Abreißen der Ausgleichsleitung 3 verdeutlicht wird. In diesem Fall tritt sowohl aus dem Haupttank 1 als auch aus dem Nebentank 2 ein starker Abfluss über die Auslassventile 4, 5 auf, wodurch die Ventilkugeln 8, 9 in den zugehörigen Ventilsitz gedrückt werden, wodurch dann die Auslassventile 4, 5 schließen. Dadurch wird verhindert, dass bei einer Undichtigkeit der Ausgleichsleitung 3 eine große Leckage auftritt.

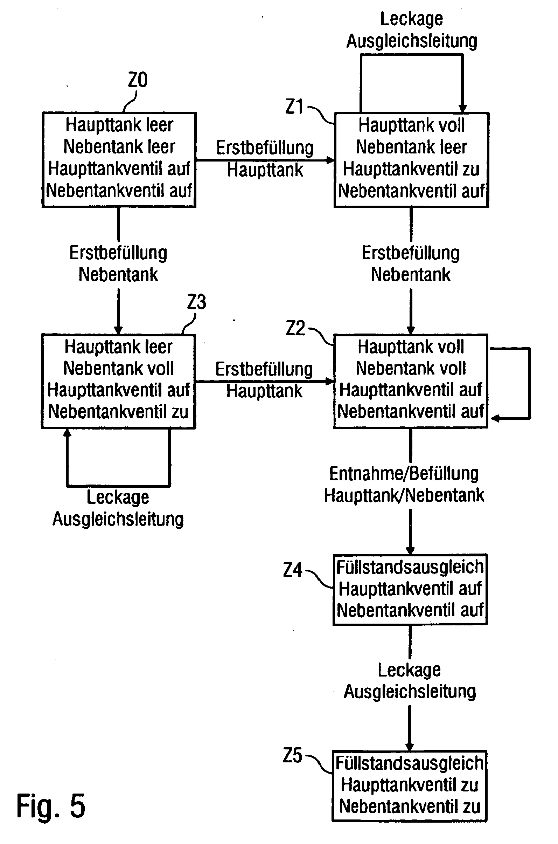

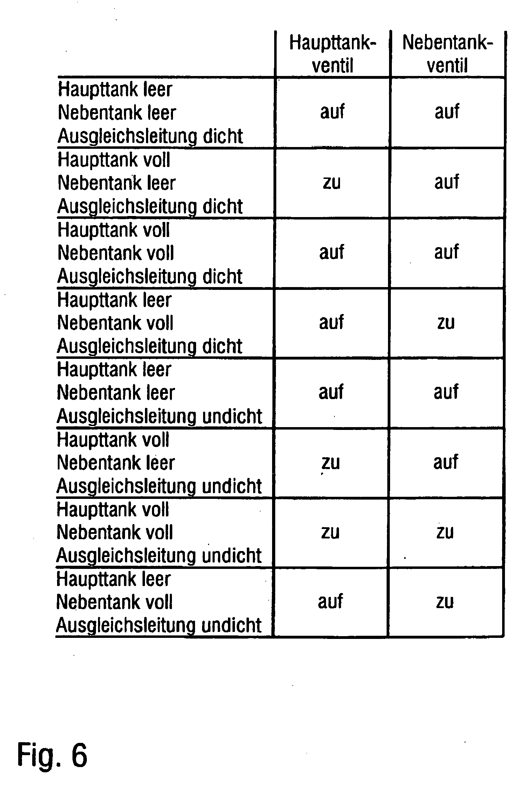

Die Figuren 5 und 6 zeigen in selbsterklärender Weise ein Zustandsdiagramm bzw. eine Zustandstabelle zur Verdeutlichung der Betriebsweise der Tankanlage aus den Figuren 1-4, wobei zur Vermeidung von Wiederholungen auf die vorstehende Beschreibung verwiesen wird.

### Bezugszeichenliste:

- 1: Haupttank
- 2: Nebentank
- 3: Ausgleichsleitung
- 4: Auslassventil des Haupttanks
- 5: Auslassventil des Nebentanks
- 6: Ventilkäfig
- 7: Ventilkäfig
- 8: Ventilkugel
- 9: Ventilkugel

## Patentansprüche

1. Tankanlage, insbesondere für ein Fahrzeug, insbesondere für ein Kraftfahrzeug, insbesondere für einen Lastkraftwagen oder einen Omnibus, mit
a) einem Haupttank (1) zur Aufnahme einer Betriebsflüssigkeit, insbesondere zur Aufnahme von Kraftstoff,
b) einem Nebentank (2) zur Aufnahme der Betriebsflüssigkeit, und
c) einer Ausgleichsleitung (3) zwischen dem Haupttank (1) und dem Nebentank (2) zum Füllstandsausgleich zwischen dem Haupttank (1) und dem Nebentank (2) durch einen füllstandsabhängigen Ausfluss aus dem Haupttank (1) und aus dem Nebentank (2),
d) einer Ventilanordnung (4, 5), die den Ausfluss aus dem Haupttank (1) und/oder aus dem Nebentank (2) in die Ausgleichsleitung (3) steuert,
**dadurch gekennzeichnet,**
e) **dass** die Ventilanordnung (4, 5) bei einer Undichtigkeit der Ausgleichsleitung (3) schließt und dadurch ein Austreten der Betriebsflüssigkeit aus der Ausgleichsleitung (3) verhindert, und
f) **dass** die Ventilanordnung (4, 5) an dem Haupttank (1) und an dem Nebentank (2) jeweils ein Auslassventil (4, 5) aufweist, das den Ausfluss aus dem Haupttank (1) bzw. aus dem Nebentank (2) in die Ausgleichsleitung (3) steuert.

2. Tankanlage nach Anspruch 1, **dadurch gekennzeichnet,**
**dass** die Ventilanordnung (4, 5) bei einer Erstbefüllung des Haupttanks (1) schließt und dadurch bei der Erstbefüllung des Haupttanks (1) den Füllstandsausgleich zwischen dem vollen Haupttank (1) und dem leeren Nebentank (2) verhindert.

3. Tankanlage nach einem der vorhergehenden Ansprüche, **dadurch gekennzeichnet, dass** die Auslassventile (4, 5) des Haupttanks (1) und/oder des Nebentanks (2) folgendes aufweisen:
a) einen Ventilsitz, der in die Ausgleichsleitung (3) mündet,
b) einen Ventilkäfig (6, 7), der an dem Ventilsitz angeordnet ist und in den Tankinnenraum hineinragt,
c) ein Ventilelement (8, 9), das in dem Ventilkäfig (6, 7) frei beweglich gefangen ist und bei einer Anlage an dem Ventilsitz den Ventilsitz abdichtet.

4. Tankanlage nach Anspruch 3, **dadurch gekennzeichnet,**
a) **dass** sich der Ventilkäfig (6, 7) nach innen in den Tankinnenraum hinein trichterförmig erweitert, und/oder
b) **dass** der Ventilkäfig (6, 7) für die Betriebsflüssigkeit durchlässig und für das Ventilelement undurchlässig ist, und/oder
c) **dass** das Ventilelement (8, 9) eine Ventilkugel ist.

5. Tankanlage nach Anspruch 3 oder 4, **dadurch gekennzeichnet,**
a) **dass** das Ventilelement (8, 9) eine kleinere Massendichte aufweist als die Betriebsflüssigkeit, so dass das Ventilelement (8, 9) in der Betriebsflüssigkeit aufschwimmt, und/oder
b) **dass** das Ventilelement (8, 9) durch eine starken Ausfluss in den Ventilsitz gedrückt wird und das Auslassventil (4, 5) schließt und ansonsten in der Betriebsflüssigkeit aufschwimmt und das Auslassventil (4, 5) öffnet, und/oder
c) **dass** die Massendichte des Ventilelements (8, 9) so auf die Massendichte der Betriebsflüssigkeit abgestimmt ist, dass das Auslassventil (4, 5) nur bei einem stärkeren Ausfluss als bei einem kontinuierlichen Füllstandsausgleich schließt und ansonsten selbsttätig öffnet.

6. Tankanlage nach einem der vorhergehenden Ansprüche, **dadurch gekennzeichnet, dass** die Ausgleichsleitung (3) jeweils unten in den Haupttank (1) und in den Nebentank (2) mündet, insbesondere im unteren Viertel, Fünftel oder Achtel des Haupttanks (1) und des Nebentanks (2), um auch bei einem niedrigen Füllstand einen Füllstandsausgleich zwischen dem Haupttank (1) und dem Nebentank (2) zu ermöglichen.

7. Tankanlage nach einem der vorhergehenden Ansprüche, **dadurch gekennzeichnet, dass** die Ventilanordnung (4, 5) eigenmediumbetätigt ist und den Ausfluss aus dem Haupttank (1) und aus dem Nebentank (2) selbsttätig ohne eine externe Ansteuerung steuert.

8. Fahrzeug, insbesondere Kraftfahrzeug, insbesondere Lastkraftwagen oder Omnibus, mit einer Tankanlage nach einem der vorhergehenden Ansprüche.

## Claims

1. A tank system, in particular for a vehicle, in particular for a motor vehicle, in particular for a lorry or an omnibus, having
a) a main tank (1) for receiving an operating liquid, in particular for receiving fuel,
b) an auxiliary tank (2) for receiving the operating liquid, and
c) an equalizing line (3) between the main tank (1) and the auxiliary tank (2) for equalizing the filling level between the main tank (1) and the auxiliary tank (2) by means of a filling level-dependent outflow from the main tank (1) and from the auxiliary tank (2),
d) a valve arrangement (4, 5) which controls the outflow from the main tank (1) and/or from the auxiliary tank (2) into the equalizing line (3), **characterized**
e) **in that** the valve arrangement (4, 5) closes in the event of a leak of the equalizing line (3) and prevents an escape of the operating liquid from the equalizing line (3) as a result, and
f) **in that** the valve arrangement (4, 5) has in each case one outlet valve (4, 5) at the main tank (1) and at the auxiliary tank (2), which outlet valve (4, 5) controls the outflow from the main tank (1) and from the auxiliary tank (2), respectively, into the equalizing line (3).

2. The tank system according to Claim 1, **characterized in that** the valve arrangement (4, 5) closes in the event of initial filling of the main tank (1) and prevents the filling level equalization between the full main tank (1) and the empty auxiliary tank (2) during the initial filling of the main tank (1) as a result.

3. The tank system according to either of the preceding claims, **characterized in that** the outlet valves (4, 5) of the main tank (1) and/or of the auxiliary tank (2) have the hollowing:
a) a valve seat which opens into the equalizing line (3),
b) a valve cage (6, 7) which is arranged on the valve seat and protrudes into the tank interior space,
c) a valve element (8, 9) which is captured in a freely movable manner in the valve cage (6, 7) and seals the valve seat in the case of contact against the valve seat.

4. The tank system according to Claim 3, **characterized**
a) **in that** the valve cage (6, 7) is widened in a funnel-shaped manner inwardly into the tank interior space, and/or
b) **in that** the valve cage (6, 7) is permeable for the operating liquid and is impermeable for the valve element, and/or
c) **in that** the valve element (8, 9) is a valve ball.

5. The tank system according to Claim 3 or 4, **characterized**
a) **in that** the valve element (8, 9) has a smaller mass density than the operating liquid, with the result that the valve element (8, 9) floats in the operating liquid, and/or
b) **in that** the valve element (8, 9) is pressed into the valve seat by way of a pronounced out flow and closes the outlet valve (4, 5), and otherwise floats in the operating liquid and opens the cutlet valve (4, 5), and/or
c) **in that** the mass density of the valve element (8, 9) is adapted to the mass density of the operating liquid in such a way that the outlet valve (4, 5) closes only in the event of a more pronounced outflow than in the event of a continuous filling level equalization, and otherwise opens automatically.

6. The tank system according to one of the preceding claims, **characterized in that** the equalizing line (3) opens in each case at the bottom into the main tank (1) and into the auxiliary tank (2), in particular in the lower quarter, fifth or eighth of the main tank (1) and the auxiliary tank (2), in order to make a filling level equalization between the main tank (1) and the auxiliary tank (2) possible even in the case of a low filling level.

7. The tank system according to one of the preceding claims, **characterized in that** the valve arrangement (4, 5) is actuated by way of its intrinsic medium and automatically controls the outflow from the main tank (1) and from the auxiliary tank (2) without an external actuation.

8. A vehicle, in particular motor vehicle, in particular lorry or omnibus, having a tank system according to one of the preceding claims.

## Revendications

1. Installation de réservoir, en particulier pour un véhicule, en particulier pour un véhicule automobile, en particulier pour un camion ou un autobus, avec
a) un réservoir principal (1) destiné à contenir un liquide de fonctionnement, en particulier destiné à contenir un carburant,
b) un réservoir auxiliaire (2) destiné à contenir le liquide de fonctionnement, et
c) une conduite d'équilibrage (3) entre le réservoir principal (1) et le réservoir auxiliaire (2) pour équilibrer le niveau de remplissage entre le réservoir principal (1) et le réservoir auxiliaire (2) par un écoulement lié au niveau de remplissage à partir du réservoir principal (1) et à partir du réservoir auxiliaire (2),
d) un ensemble de soupapes (4, 5), qui commande l'écoulement à partir du réservoir principal (1) et/ou à partir du réservoir auxiliaire (2) dans la conduite d'équilibrage (3),
**caractérisée en ce que**
e) l'ensemble de soupapes (4, 5) se ferme en cas de défaut d'étanchéité dans la conduite d'équilibrage (3) et empêche ainsi une sortie du liquide de fonctionnement hors de la conduite d'équilibrage (3), et
f) l'ensemble de soupapes (4, 5) présente respectivement au réservoir principal (1) et au réservoir auxiliaire (2) une soupape de sortie (4, 5), qui commande l'écoulement à partir du réservoir principal (1) ou à partir du réservoir auxiliaire (2) dans la conduite d'équilibrage (3).

2. Installation de réservoir selon la revendication 1, **caractérisée en ce que** l'ensemble de soupapes (4, 5) se ferme lors d'un premier remplissage du réservoir principal (1) et empêche ainsi l'équilibrage du niveau de remplissage entre le réservoir principal (1) et le réservoir auxiliaire (2) lors du premier remplissage du réservoir principal (1).

3. Installation de réservoir selon l'une quelconque des revendications précédentes, **caractérisée en ce que** les soupapes de sortie (4, 5) du réservoir principal (1) et/ou du réservoir auxiliaire (2) présentent les caractéristiques suivantes:
a) un siège de soupape, qui débouche dans la conduite d'équilibrage (3),
b) une cage de soupape (6, 7), qui est disposée sur le siège de soupape et qui pénètre dans l'espace intérieur du réservoir,
c) un élément de soupape (8, 9), qui est retenu en mouvement libre dans la cage de soupape (6, 7) et qui ferme le siège de soupape de façon étanche lors d'une application sur le siège de soupape.

4. Installation de réservoir selon la revendication 3, **caractérisée en ce que**:
a) la cage de soupape (6, 7) s'évase en forme d'entonnoir vers l'intérieur dans l'espace intérieur du réservoir, et/ou
b) la cage de soupape (6, 7) laisse passer le liquide de fonctionnement et ne laisse pas passer l'élément de soupape, et/ou
c) l'élément de soupape (8, 9) est une bille de soupape.

5. Installation de réservoir selon la revendication 3 ou 4, **caractérisée en ce que**:
a) l'élément de soupape (8, 9) présente une densité massique plus faible que le liquide de fonctionnement, de telle marnière que l'élément de soupape (8, 9) flotte sur le liquide de fonctionnement, et/ou
b) l'élément de soupape (8, 9) est poussé par un fort écoulement dans le siège de soupape et ferme la soupape de sortie (4, 5) et pour le reste flotte sur le liquide de fonctionnement et ouvre la soupape de sortie (4, 5), et/ou
c) la densité massique de l'élément de soupape (8, 9) est adaptée à la densité massique du liquide de fonctionnement, de telle manière que la soupape de sortie (4, 5) ne se ferme que lors d'un plus fort écoulement que lors d'un équilibrage continu de niveau de remplissage et pour le reste s'ouvre automatiquement.

6. Installation de réservoir selon l'une quelconque des revendications précédentes, **caractérisée en ce que** la conduite d'équilibrage (3) débouche respectivement dans le bas dans le réservoir principal (1) et dans le réservoir auxiliaire (2), en particulier dans le quart, le cinquième ou le huitième inférieur du réservoir principal (1) et du réservoir auxiliaire (2), afin de permettre un équilibrage du niveau de remplissage entre le réservoir principal (1) et le réservoir auxiliaire (2) même lorsque le niveau de remplissage est bas.

7. Installation de réservoir selon l'une quelconque des revendications précédentes, **caractérisée en ce que** l'ensemble de soupapes (4, 5) est actionné par le liquide lui-même et commande l'écoulement à partir du réservoir principal (1) et à partir du réservoir auxiliaire (2) automatiquement, sans aucune commande extérieure.

8. Véhicule, en particulier véhicule automobile, en particulier camion ou autobus, avec une installation de réservoir selon l'une quelconque des revendications précédentes.
